# EUROPEAN PATENT SPECIFICATION

(11) **EP 3 590 794 B1**
(45) Date of publication and mention of the grant of the patent: **24.02.2021**
(21) Application number: 18875022.8
(22) Date of filing: 11.05.2018
(51) Int. Cl.: B62D 25/18

(54) **RETRACTABLE MUD-GUARD FLAP**
EINZIEHBARE SCHMUTZFÄNGER
BAVETTE PARE-BOUE ESCAMOTABLE

(43) Date of publication of application: 08.01.2020
(73) Proprietor: Martinez Fernandez, Jose Ignacio, 48003 Bilbao (ES)
(72) Inventor: Martinez Fernandez, Jose Ignacio, 48003 Bilbao (ES)
(74) Representative: Ezcurra Zufia, Maria Antonia
(86) International application number: PCT/ES2018/070348
(87) International publication number: WO 2019/215352

(56) References cited:
- CN-A- 103 121 472
- DE-A1-102016 115 080
- DE-U- 1 831 898
- DE-U- 7 108 242
- FR-A1- 2 798 110
- US-A- 5 582 431
- US-A1- 2014 042 736
- US-B1- 6 565 122
- DATABASE WPI Week 201538 20 April 2015 (2015-04-20) Thomson Scientific, London, GB; AN 2015-27337W & KR 2015 0001499 U
- DATABASE WPI Week 201438 12 May 2014 (2014-05-12) Thomson Scientific, London, GB; AN 2014-J30464 & JP 2014 084035 A

## Description

### OBJECT OF THE INVENTION

The object of the present invention, as stated in the title thereof, is a retractable mud flap; it therefore relates to items in the shape of skirts which, when installed at the rearward part of the wheel well, prevent the rearward discharge of mud and rain.

The present invention is characterised in that the flaps are retractable, it being possible to deploy or retract them in accordance with the driver's wishes or under certain circumstances.

The present invention is therefore included within the scope of vehicles, and particularly within that of protective mud flaps.

### BACKGROUND OF THE INVENTION

The applicant is aware of the current existence of a great number of protective mud flaps, generally employed for their attachment to motor vehicles of all types, located to the rear of the front and rear wheels and configured as devices to prevent the throwing of objects, particles and other elements to be found on roads and similar, in order that the hurling thereof should not damage the vehicle travelling behind, and the vehicle itself.

in the state of the art are known the following documents:
∘ FR2798110 discloses a mud flap is formed by a plate placed behind at least each rear wheel of the vehicle to prevent spray being thrown up. The plate is displaced between a raised and a lowered position by an electric motor and a rack and pinion transmission attached to the plate.
∘ US2014042736A discloses a retractable mud flap assembly has a housing suspended from a vehicle hitch receiver tube so as not to interfere with mounting of a hitch ball thereon.
∘ KR20150001499, which discloses a mudguard for dump trucks with adjustable length in the vertical direction. The mudguard of the present invention is installed on the lower end of the loading box of the dump truck, and has a plate shape and has a first body having bending rails on both sides

In general, the larger the mud flap, the greater the protection it affords, and the nearer the lower edge is to the road surface, the better the protection. As the length of the mud flaps increases, reducing the distance between them and the road surface, another problem arises, in that when a vehicle, while reversing, strikes an obstruction, the mud flap is tightly trapped between the wheel and said obstruction, and if the vehicle continues to reverse, the material of the flap may be torn or the flap may be ripped from its mounting.

Therefore, the object of the present invention is to overcome the aforementioned drawbacks regarding a lack of visual appeal and the damage caused by its nearness to the road surface, as well as possible tears when reversing, by developing a protective mud flap as disclosed below, the essential nature whereof is described in the first claim.

### DESCRIPTION OF THE INVENTION

The object of the present invention is a retractable protective mud flap which solves the aforementioned issues, which is deployed when the windscreen wipers are activated or manually, to be subsequently retracted and concealed when its use is not required.

The retractable or telescopic protective mud flap which is the object of the invention shall be stored in a casing at the rear of each wheel to which it is desired to install the same, within the wing; by means of electrical mechanisms consisting of a small electric motor and a mechanism to transform the rotational movement of the motor into a linear up-and-down movement which is transmitted to the mud flap, the latter moves forward when the windscreen wipers are activated or manually, to be subsequently retracted and concealed when its use is no longer required.

The casing shall be affixed to the chassis of the vehicle. At its lower part, the casing shall feature a wedge-shape adjusted to the thickness of the mud flap, to eliminate any possibility of any remnants of mud accumulating on the mud flap.

The protective mud flaps shall feature dimensions in accordance with the width of the wheel well of the vehicles on which they are installed, and also in accordance with the height of the wing of the vehicles in question and according to the aesthetic appearance of the vehicle. The mud flaps may be made from a flexible material such as rubber, and hang therefrom, behind the wheel, and protective mud flaps made from impact-resistant rigid material.

The mechanisms for raising and lowering the mud flaps housed within the casings affixed to the chassis of the vehicle may be of various types, from a splined rigid cable anchored at its extremity to a puller component affixed to the upper edge of the mud flap, and featuring a guiding means within the casing, or means consisting of lateral guides disposed within the casing and a number of cables linked at their extremities to the edges of the mud flap, and retracted or deployed by means of a motor.

The motor assembly which moves the mud flap shall always be equipped with an overload protection device, which will automatically disconnect the same if excessive resistance is detected in the movement of the mud flap, for example, when an obstacle is found.

Unless stated otherwise, all the technical and scientific elements employed in the present specification have the meaning usually understood by a normal expert skilled in the art to which this invention belongs. In the practice of the present invention, procedures and materials which are similar or equivalent to those described in the specification may be used.

Throughout the description and the claims, the word "comprise" and its variants are not intended to exclude other technical characteristics, additives, components or steps. To those skilled in the art, other objects, advantages and characteristics of the invention will become evident partly from the description and partly from the practice of the invention.

### EXPLANATION OF THE DRAWINGS

As a supplement to the description made herein, and for the purpose of aiding the better understanding of the characteristics of the invention, in accordance with a preferred example of a practical embodiment of the same, a set of drawings is attached as an integral part of said description wherein, by way of illustration and not limitation, the following is portrayed:
In Figure 1, a general portrayal of a retractable protective mud flap such as the object of the invention may be seen.
In Figure 2, a first embodiment of the mud flap raising and lowering means may be seen.
In Figure 3, a second embodiment of the mud flap raising and lowering means may be seen.

### PREFERRED EMBODIMENT OF THE INVENTION

In the light of the Figures, a preferred embodiment of the proposed invention is described below.

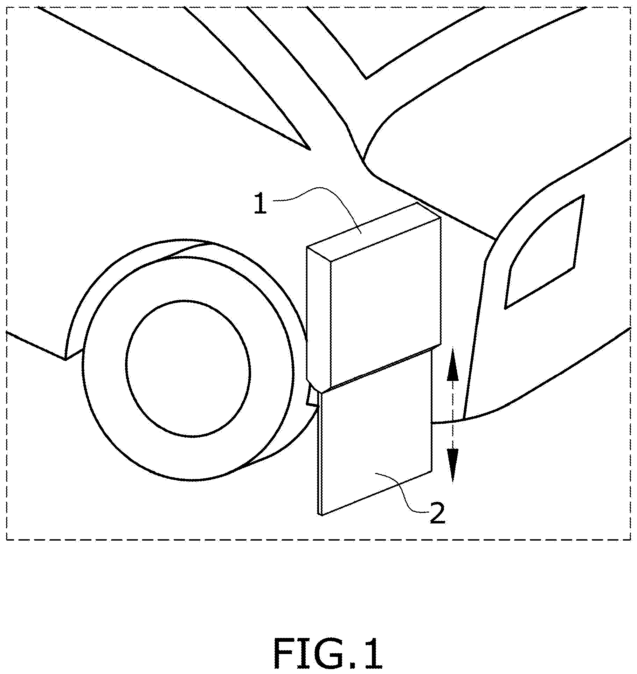

In Figure 1 it may be seen that it comprises a casing (1) affixable to the bodywork of a vehicle at the location where it is desired to deploy and retract a mud flap (2). The two-way arrow is intended to express that the mud flap (2) may be deployed and retracted.

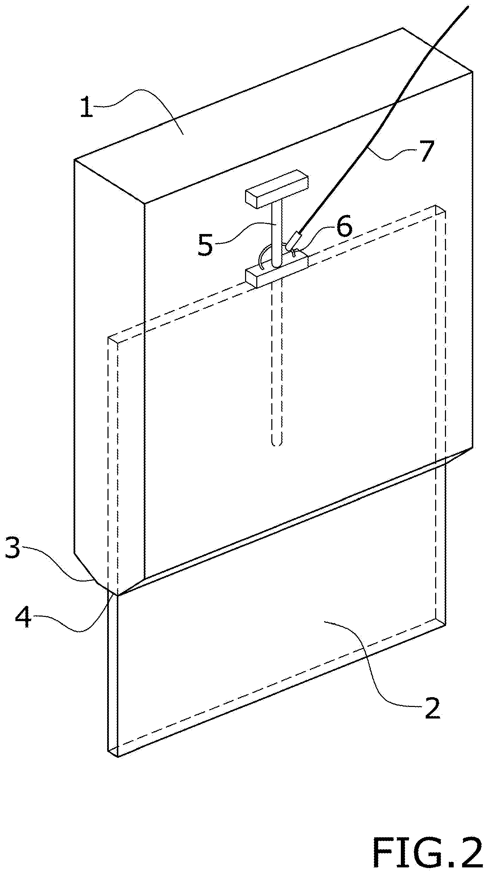

In Figure 2, constructional details of the casing (2) are portrayed; it may be observed that its lower edge (3) is wedge-shaped, revealing an inlet/outlet port for the mud flap with a thickness corresponding to that of the mud flap (2) in order that remnants of mud or even water may not enter the casing (1).

Said Figure 2 portrays a first embodiment of the raising and lowering means for the mud flap (2), consisting of the use of a guide rail (5) which guides the mud flap (2) during its vertical upward or downward displacement; furthermore, on the upper edge of the mud flap a puller component (6) is affixed, to which the extremity of a splined rigid cable (7) is in turn affixed, operable by a motor (not portrayed). Thus, the raising and lowering of the mud flap is achieved which, as stated above, may be operable manually or, for example, when the windscreen wipers are activated.

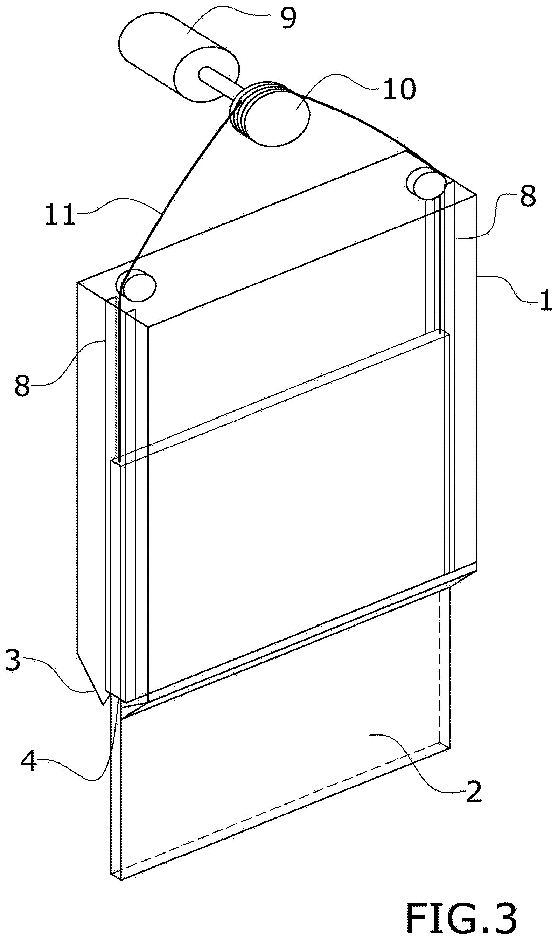

Figure 3 portrays a second embodiment of the means for raising and lowering the mud flap (2) with regard to the casing (1), consisting of the disposition of a number of lateral guides (8) within the casing for the correct guiding of the mud flap (2). At the upper extremities of the mud flap (2), a number of cables (11) are attached; these being affixed to a pulley (10) driven by a motor (9), to enable the guided raising and lowering of the mud flap.

In both embodiments, the motor assembly which moves the mud flap shall always be equipped with an overload protection device which will automatically disconnect the same if excessive resistance is detected in the movement of the mud flap; for example, when an obstacle is found.

Although the casings and the mud flaps are portrayed with a rectangular shape, the casings may have different shapes in order to adapt to the requirements and design of the bodywork; likewise, the mud flaps may have different shapes in order to adapt to the requirements and design of the bodywork.

The nature of the present invention having been sufficiently described, likewise the method for putting the same into practice, it is stated that within its essential nature, it may be put into practice in other embodiments which differ in detail from that mentioned as an example, but which are defined by the appended claims.

## Claims

1. A retractable protective mud flap, **characterised in that** it comprises a casing (1) affixable to the bodywork of a vehicle at the location where it is desired to deploy and retract a mud flap (2), where the casing features a wedge-shaped lower edge (3), revealing an inlet/outlet port (4) for the mud flap with a thickness corresponding to that of the mud flap (2), a means for the raising and lowering of the mud flap (2) being associated with the casing and mud flap (2) assembly, **characterized in that** the means for the raising and lowering of the mud flap (2) comprise guide means and at least one cable driven by a motor (9) wherein the guide means are either a guide rail (5) which guides the mud flap (1) during its vertical upward or downward displacement or lateral guides (8) within the casing for the correct guiding of the mud flap (2).

2. A retractable protective mud flap, as claimed in claim 1, **characterised in that** when a guide rail (5) is used, on the upper edge of the mud flap a puller component (6) is affixed, to which the extremity of the at least one cable, which is a splined rigid cable (7) is in turn affixed, and it is driven by the motor (9).

3. A retractable protective mud flap, as claimed in claim 1, **characterised in that** when the lateral guides (8) are used at the upper extremities of the mud flap (2) cables (11) are attached; these being affixed to a pulley (10) driven by a motor (9).

4. A retractable protective mud flap, as claimed in any of the preceding claims, **characterised in that** the motor (9) which moves the mud flap (2) is equipped with an overload protection device, which automatically disconnects the same if excessive resistance is detected.

5. A retractable protective mud flap, as claimed in any of the preceding claims, **characterised in that** the activation of the mud flap (2) is in connection with the activation of the windscreen wipers, or it may be performed manually.

## Patentansprüche

1. Einziehbarer schützender Schmutzfänger, **dadurch gekennzeichnet, dass** er ein Gehäuse (1) umfasst, das an der Karosserie eines Fahrzeugs an der Stelle befestigt werden kann, an der ein Schmutzfänger (2) eingesetzt und eingezogen werden soll, wobei das Gehäuse eine keilförmige untere Kante (3) besitzt, die eine Einlass-/Auslassöffnung (4) für den Schmutzfänger mit einer Dicke aufweist, die der des Schmutzfängers (2) entspricht, wobei eine Vorrichtung zum Anheben und Absenken des Schmutzfängers (2) mit der Baugruppe aus Gehäuse und Schmutzfänger (2) verbunden ist, **dadurch gekennzeichnet, dass** die Vorrichtung zum Anheben und Absenken des Schmutzfängers (2) eine Führungseinrichtung und mindestens ein durch einen Motor (9) angetriebenes Seil umfasst, wobei die Führungseinrichtung entweder eine Führungsschiene (5) ist, die den Schmutzfänger (1) während seiner vertikalen Aufwärts- oder Abwärtsbewegung führt, oder seitliche Führungen (8) innerhalb des Gehäuses für die sachgemäße Führung des Schmutzfängers (2) sind.

2. Einziehbarer schützender Schmutzfänger nach Anspruch 1, **dadurch gekennzeichnet, dass** bei Verwendung einer Führungsschiene (5) an der oberen Kante des Schmutzfängers ein Zugteil (6) befestigt ist, an dem wiederum das Ende von mindestens einem Seil, das ein verzahntes starres Seil (7) ist, befestigt ist und das durch den Motor (9) angetrieben wird.

3. Einziehbarer schützender Schmutzfänger nach Anspruch 1, **dadurch gekennzeichnet, dass** bei Verwendung der seitlichen Führungen (8) an den oberen Enden des Schmutzfängers (2) Seile (11) angebracht sind, die an einer durch einen Motor (9) angetriebenen Riemenscheibe (10) befestigt sind.

4. Einziehbarer schützender Schmutzfänger nach einem der vorhergehenden Ansprüche, **dadurch gekennzeichnet, dass** der Motor (9), der den Schmutzfänger (2) bewegt, mit einer Überlastschutzeinrichtung ausgestattet ist, die diesen bei Feststellung eines zu hohen Widerstandes automatisch abschaltet.

5. Einziehbarer schützender Schmutzfänger nach einem der vorhergehenden Ansprüche, **dadurch gekennzeichnet, dass** die Betätigung des Schmutzfängers (2) in Verbindung mit der Betätigung der Scheibenwischer erfolgt oder manuell durchgeführt werden kann.

## Revendications

1. Un pare-boue de protection rétractable, **caractérisé par le fait qu'**il comprend un carter (1) qui peut être fixé sur le châssis d'un véhicule à l'emplacement souhaité pour déployer et rétracter un pare-boue (2), où le carter comprend un bord inférieur en forme de cale (3), révélant un orifice d'entrée/de sortie (4) pour le pare-boue avec une épaisseur correspondant à celle du pare-boue (2), un moyen pour faire monter et descendre le pare-boue (2) étant associé avec le carter et l'ensemble du pare-boue (2), **caractérisé en ce que** le moyen pour monter et abaisser le pare-boue (2) comprend un moyen de guidage et au moins un câble entraîné par un moteur (9) où le moyen de guidage est soit un rail de guidage (5) qui guide le pare-boue (1) pendant son déplacement vertical vers le haut ou vers le bas, soit des guides latéraux (8) dans le carter pour le bon guidage du pare-boue (2).

2. Un pare-boue de protection rétractable selon la revendication 1, **caractérisé par le fait que** lorsqu'un rail de guidage (5) est utilisé, sur le bord supérieur du pare-boue est fixé un composant d'extracteur (6) sur lequel l'extrémité d'au moins un câble qui est un câble rigide canelé (7) est fixé à son tour, et est entraîné par le moteur (9).

3. Un pare-boue de protection rétractable selon la revendication 1, **caractérisé par le fait que** lorsque les guides latéraux (8) sont utilisés sur les extrémités supérieures du pare-boue (2), des câbles (11) sont attachés, fixés à une poulie (10) entraînée par un moteur (9).

4. Un pare-boue de protection rétractable, selon les revendications précédentes, **caractérisé par le fait que** le moteur (9) qui déplace le pare-boue (2) est équipé d'un dispositif de protection contre la surcharge qui le déconnecte automatiquement si une résistance excessive est détectée.

5. Un pare-boue de protection rétractable, selon les revendications précédentes, **caractérisé par le fait que** l'activation du pare-boue (2) est connectée avec l'activation des essuie-glace, ou qu'elle peut être réalisée manuellement.
